# EUROPÄISCHE PATENTSCHRIFT

(11) **EP 2 227 528 B1**
(45) Veröffentlichungstag und Bekanntmachung des Hinweises auf die Patenterteilung: **29.02.2012**
(21) Anmeldenummer: 08863989.3
(22) Anmeldetag: 09.12.2008
(51) Int. Cl.: C10M 107/38, C10M 147/04, C08F 259/08, C08J 3/09, C10N 70/00, C10N 30/06, C10N 20/06

(54) **LANGZEITSTABILE ÖL-PTFE-DISPERSION UND VERFAHREN ZU IHRER HERSTELLUNG**
LONG-TERM STABLE OIL PTFE DISPERSION AND METHOD FOR ITS PRODUCTION
DISPERSION HUILE-PTFE STABLE À LONG TERME ET SON PROCÉDÉ DE FABRICATION

(30) Priorität: 23.12.2007 DE 102007055927
(43) Veröffentlichungstag der Anmeldung: 15.09.2010
(73) Patentinhaber: Leibniz-Institut für Polymerforschung Dresden e.V., 01069 Dresden (DE)
(72) Erfinder: LEHMANN, Dieter, 01640 Coswig (DE)
(74) Vertreter: Rauschenbach, Dieter
(86) Internationale Anmeldenummer: PCT/EP2008/067082
(87) Internationale Veröffentlichungsnummer: WO 2009/080493

(56) Entgegenhaltungen:
- DE-A1-102004 016 873
- US-A- 4 465 607
- US-A- 5 744 539
- US-A- 5 846 447

## Beschreibung

Die Erfindung bezieht sich auf die Gebiete des Maschinenbaus und der Chemie und betrifft Öl-PTFE-Dispersionen, wie sie beispielsweise in bewegten Teilen mit tribologischen Anforderungen hinsichtlich Gleitreibung und Verschleiß, wie beispielsweise in Getrieben oder Lagern zum Einsatz kommen können, sowie ein Verfahren zu ihrer Herstellung.

Öl-PTFE-Dispersionen sind sehr zahlreich beschrieben. Eine Dispergierung von PTFE in Öl führte, sowohl mit als auch ohne Zusatzmittel, in kurzen Zeiten zur Sedimentation des PTFE, das sich dann meist nur noch schwer aufwirbeln/redispergieren lässt.

Sehr viele Publikationen befassen sich aber nur mit der Zusammensetzung der Dispersionen bzw. mit dem Einsatz spezieller Additive zur besseren Dispersionsstabilisierung, wobei nicht die Dispersionsstabilität im Vordergrund steht.

Aus dem FR 2857373 A1 ist ein PTFE-enthaltendes Mineralöl mit 80 bis 97 (vorzugsweise 95 bis 97) Ma.-% an Mineralöl und 0,5 bis 1.5 (vorzugsweise ca. 1) Ma.-% an submicron PTFE, sowie Duftstoff- und Farbstoffzusatz, in der Dispersion für Haushalt und Werkstatt bekannt.

Ebenfalls bekannt sind die Untersuchungen nach M. G. Ivanov et al., Ural. Gos. Tekh. Univ. UPI, Yekaterinburg, Russia. Trenie i Iznos (2004), 25(1), S. 99-103 zu den tribologischen Eigenschaften eines Schmiermittels, bestehend aus Öl, PTFE und ultra-dispergierten Diamanten, in einer Stahl-auf-Stahl Reibpaarung.

Weiterhin ist nach der JP 2003113390 A eine Methode zur Dispergierung von PTFE-Pulver (mittlerer Partikeldurchmesser von 7 µm) in Basisschmieröl bei ≥ 40° in einem Überdruck-Homogenisierer und dann in einer Kugel-Mühle zur Reduktion der mittleren Partikelgröße ≤ 1 µm für die Herstellung von Schmieröl-Additiven für Dieselmotoren-Kurbelwellengehäuse bekannt.

Diese Veröffentlichungen geben keine Auskunft zur Dispersionsstabilität.

Weiterhin ist nach JP 11021577 A ein Schmiermittel bekannt, das aus einem Basisöl (1), ausgewählt aus Pflanzenölen, tierischen Fetten, Mineralölen, Esterölen, gemischten Ölen und modifizierten Ölen, und PTFE-Pulver (2) besteht, das im Basisöl in Gegenwart eines multivalenten Metallsalzes einer höheren Fettsäure, das im Basisöl gelöst ist, dispergiert wurde.

Ebenfalls bekannt ist nach US 5846447 A ein Prozess zur Bildung von PTFE-Dispersionen in einem organischen Trägerfluid (besonders Schmieröl), in dem (1) die Behandlung der PTFE-Partikel-Durchmesser < 1 µm (bevorzugt < 0,25 µm) mit Elektronen- oder Gamma-Bestrahlung von ≥ 4 Mrad in Gegenwart von atmosphärischen Sauerstoff und Wasser, (2) die Mischung der bestrahlten Partikel mit dem Schmieröl und ≥ 1/mindestens einem Dispergiermittel, und (3) das Durchlaufen dieser Mischung durch eine Vielzahl von Düsen innerhalb einer Flüssig-Düsen Wechselwirkungskammer bei einem Druck ≥1000 psi zur Deagglomerierung und Stabilisierung der PTFE-Partikel erfolgt. Es wird berichtet, dass die Methode eine stabile uniforme PTFE-Dispersion liefert und die Einleitung von unerwünschtem Wasser in das Schmiermittel vermieden wird.

Nach der US 5744539 A ist weiterhin eine PTFE-Dispersion bekannt, die im Wesentlichen aus einer stabilen Dispersion von fein verteilten PTFE-Partikeln und einem polymeren Dispersionsmittel in einem Schmieröl besteht, in der die Dispersionen im Wesentlichen frei sind von einer PTFE-Sedimentation.

Nach der PL 168489 B1 ist eine Methode zur Herstellung von PTFE-Suspensionen beschrieben, die als Additive für Schmiermittel und Hydraulik-Öle eingesetzt werden. Eine 16 Gew.-%ige wässrige PTFE-Suspension (enthaltend PTFE 60, Ammonium Perfluorocaprylat 0,02, nichtionische Tenside 0,02 etc.) wird zu Schmierölen und Hydraulik-Flüssigkeiten zugesetzt. Im weiteren Herstellungsverfahren werden noch 0,2 bis 4 Gew.-% Dispergiermittel, 0,3 bis 4 Gew.-% Tensid und 20 Gew.-% Verdicker zur Öl-Mischung zugesetzt.

Aus der NL 9300742 A ist ein Schmiermittel bekannt, basierend auf einem festen Harz (Teflon/PTFE), das in einem Träger im Schmiermittel dispergiert ist. Die Trägersubstanz ist Silikonöl; die Dispergierung wird in Gegenwart eines Dispergiermittels durchgeführt.

Weiterhin ist aus der DE 36 42 617 C1 ein Verfahren zur Herstellung einer PTFE-Dispersion bekannt, welches in Öl als Schmieröl oder seine Additive, in denen PTFE in Pulverform oder als wässrige Dispersion in Gegenwart von nichtionischen Tensiden (Antistatika) in einem kommerziellem Mineralöl gemischt wird.

Nach der DD 25 19 88 A1 ist ein PTFE-enthaltendes Schmiermittel bekannt, das als Dispergiermittel Polyfluorcarbonsäuren und ihre Ester enthält, die die Stabilität des dispergierten PTFE-Pulvers mit Korngrößen von 0,1 bis 0,5 µm verbessern.

H. Driescher et al., Schmierungstechnik (1984), 15(7), 199-202 beschreiben die aktive Lebensdauer eines Präzisionsschmiermittels für die Anwendung in Hochvakuum, in dem feines Öl eingesetzt wird, das PTFE-Feinpulver und zur Stabilisierung der PTFE-Dispersion Perfluoralkenyl-alkyl-ether-Dispersionsmittel enthält.

Nach der US 3,933,656 A ist ein Schmieröl mit Fluorcarbon-Additiv mit Grenzflächeneigenschaften und mit einer reduzierten Emission bekannt, in dem 300 cm³ submicron-size PTFE [9002-84-0]-Pulver und 30 cm³ Silan A 1100 [919-30-2] in einer gleichen Menge an Motoröl dispergiert werden.

Aus allen diesen Offenbarungen ist bekannt, dass eine gewisse Dispersionsstabilität erst durch Zusatz von Additiven überhaupt erreicht oder erhöht werden kann.

Weiterhin ist nach der RU 2212418 C1 eine Dispersion aus ultrafeinem PTFE bekannt, hergestellt durch thermischen Abbau von PTFE bei 480 bis 540°C in Gegenwart einer Sauerstoff enthaltenden Verbindung, die thermodynamisch zur PTFE-Oxidation geeignet ist, unter der Atmosphäre der gasförmigen Abbauprodukte. Die Abbau-/Zersetzungsprodukte aus dem Abbauprozess werden gekühlt und beim Durchleiten durch ein Mineralöl kondensiert, wodurch eine PTFE-Dispersion (12,9 g trockenes PTFE mit einem Sauerstoff-Gehalt von 1,7%) gebildet wird. Das gebildete ultrafeine PTFE ist lyophil und bildet stabile Dispersionen ohne Zusatz von Stabilisatoren oder Tensiden.

Dabei sind die beschriebenen gasförmigen oxidierten Abbauprodukte des PTFE tatsächlich kein PTFE mehr, da sie nicht mehr die vorteilhaften Eigenschaften des PTFE im vollen Umfang aufweisen.

Aus der US 4,465,607 A ist weiterhin eine PTFE enthaltende SchmiermittelZusammensetzung bekannt, in der das PTFE mit Partikelgrößen von 1 bis 200 µm durch Ultraschall-Agitation/Behandlung in einem Basis-Schmieröl stabile Dispersionen ergeben.

Aussagen über die Langzeitstabilität sind nicht gemacht worden.

Von S. Palios et al., Tribology Series (1996), 141-152. Publisher: Elsevier, wurde das Verhalten von PTFE-Suspensionen (PTFE in Schmieröl) in Abhängigkeit von der PTFE-Partikelgröße im Roll-/Gleit-Kontakt untersucht. Größere PTFE-Partikel scheinen Reibung und Verschleiß zu senken. Nicht angegeben wurde, ob die Partikel auf der reibenden Seite stark haften und eine permanente Beschichtung bilden. Sehr kleine PTFE-Partikel in komplett formulierten Ölen scheinen keinen messbaren Beitrag zur Reibungs- und Verschleiß-Reduktion beizutragen.

Das Prinzip der reaktiven Kopplung/Oberflächenmodifizierung von PTFE-Nano-/Mikropulver-partikeln mit olefinisch ungesättigten Monomeren/Verbindungen ist bereits aus DE 103 51 812 A1, DE 103 51 813 A1 und DE 10 2004 016 876 A1 bekannt.

Die Nachteile der bekannten Lösungen bestehen darin, dass keine langzeitstabilen Öl-PTFE-Dispersionen bekannt sind.

Die Aufgabe der vorliegenden Erfindung besteht daher in der Angabe von Öl-PTFE-Dispersion, die langzeitstabil sind, sowie einem einfachen und kostengünstigen Verfahren zu ihrer Herstellung.

Die Aufgabe wird durch die in den Ansprüchen angegebene Erfindung gelöst, Vorteilhafte Ausgestaltungen sind Gegenstand der Unteransprüche.

Die erfindungsgemäßen Öl-PTFE-Dispersion bestehen aus PTFE-Partikeln und mindestens einem einfach oder mehrfach olefinisch ungesättigtem Öl oder Ölgemisch, wobei die Moleküle des olefinisch ungesättigten Öles oder der olefinisch ungesättigten Anteile des Ölgemisches an PTFE-Partikeloberflächen über Radikalreaktionen kovalent/chemisch gekoppelt sind, und wobei eine feine Dispergierung der PTFE-Partikel im Öl oder Ölgemisch vorliegt.

Vorteilhafterweise bestehen die Öle oder Ölgemische überwiegend oder vollständig aus olefinisch ungesättigten Ölen oder Ölanteilen.

Ebenfalls vorteilhafterweise ist das mit Öl modifizierte PTFE konzentriert bis 90 Masse-% oder verdünnt bis 0,1 Masse-%, noch vorteilhafterweise bis 60 Masse-% oder verdünnt bis 1,0 Masse-% oder bis 3U Masse-% oder verdünnt bis 3,0 Masse-%, in der Öl-PTFE-Dispersionen vorhanden, wobei vorteilhafterweise die verdünnten Öl-PTFE-Dispersionen mit dem gleichen Öl oder Ölgemisch der Öl-PTFE-Dispersion verdünnt vorliegen oder die verdünnten Öl-PTFE-Dispersionen mit einem anderen als dem eingesetzten, aber mit der Öl-PTFE-Dispersion mischbaren Öl oder Ölgemisch verdünnt vorliegen.

Vorteilhaft ist es auch, wenn die PTFE-Partikel im Wesentlichen als Primärpartikel in der Dispersion vorliegen.

Bei dem erfindungsgemäßen Verfahren zur Herstellung von Öl-PTFE-Dispersionen werden modifizierte PTFE-(Emulsions-)Polymere mit persistenten Perfluor-(peroxy-)radikalen gemeinsam mit mindestens einem olefinisch ungesättigten Öl oder Ölgemisch, welches mindestens olefinisch ungesättigte Öl-Anteile aufweist, gemischt und nachfolgend die modifizierten PTFE-(Emulsions-)Polymere einer mechanischen Beanspruchung unterworfen, wodurch die eingesetzten modifizierten PTFE-(Emulsions-)Polymere deagglomeriert und fein dispergiert werden.

Vorteilhafterweise werden als modifizierte PTFE-(Emulsions-)Polymere strahlenchemisch oder plasmachemisch behandelte PTFE-(Emulsions-)Polymere oder PTFE-(Emulsions-)Polymere mit aus dem Polymerisationsprozess stammenden Perfluor-(peroxy-)Radikalzentren eingesetzt, wobei noch vorteilhafterweise die strahlenchemische Behandlung der PTFE-(Emulsions-)Polymere unter Sauerstoffeinfluss durchgeführt wird.

Ebenfalls vorteilhafterweise werden als Öle oder Ölgemische solche eingesetzt, die überwiegend oder vollständig aus olefinisch ungesättigten Ölen oder Ölanteilen bestehen.

Weiterhin vorteilhafterweise wird die Mischung in einem Dispergieraggregat durchgeführt.

Und auch vorteilhafterweise wird als mechanische Beanspruchung eine Scherbeanspruchung aufgebracht.

Von Vorteil ist es auch, wenn die mechanische Beanspruchung durch eine Ultraschallbehandlung, durch einen Ultraturraxrührer, durch einen Zahnscheibenrührer oder durch Verdüsen der Mischung oder durch eine Kombination von Dispergiermethoden und Disperglergeräten aufgebracht wird.

Und auch von Vorteil ist es, wenn Dispersionshilfsmittel und Dispersionsstabilisatoren zugegeben werden.

Bei der erfindungsgemäßen Öl-PTFE-Dispersion werden Moleküle des einfach oder mehrfach olefinisch ungesättigten Öles oder des Ölgemisches an die Oberfläche der PTFE-Partikel durch Radikalreaktionen kovalent/chemisch gekoppelt. Dabei müssen die bereits vorhandenen Agglomerate durch mechanische Beanspruchung wieder auf PTFE-Primärpartikel zurückgeführt und es muss während der Radikalreaktion die Agglomeration der PTFE-Partikel verhindert werden. Durch die Deagglomeration der PTFE-Partikel und die chemische Kopplung von Ölmolekülen an der PTFE-Partikeloberfläche wird gleichzeitig eine permanente Ladungstrennung zwischen den PTFE-Partikeln und den Ölmolekülen erreicht, was zur Verbesserung der Dispersionsstabilisierung beiträgt und zu der erfindungsgemäßen langzeitstabilen Öl-PTFE-Dispersion führt.

Die Langzeitstabilität kann dabei im Rahmen der vorliegenden Erfindung bedeuten, dass keine nennenswerte Trennung der Öl-PTFE-Dispersion innerhalb von Stunden bis Tagen, oder bis Monaten, oder sogar bis Jahren auftritt.

Weiterhin kann erfindungsgemäß auf den Zusatz von Dispersionshilfsmittel(n) und Dispersionsstabilisator(en) teilweise oder sogar ganz verzichtet werden.

Ebenfalls ist eine Nachbehandlung der ungesättigten Öle oder Ölanteile in der Öl-PTFE-Dispersion durch Hydrierung der olefinischen Doppelbindungen möglich.

Die vorliegende Erfindung unterscheidet sich von den Lösungen des Standes der Technik dadurch, dass bisher keine langzeitstabilen Öl-PTFE-Dispersionen herstellbar waren, da bisher keine kovalente/chemische Kopplung/Pfropfung der Öl-Moleküle mit den PTFE-Partikeln bekannt oder erreichbar war.

Öle sind bekanntermaßen keine Monomere, da die allylischen Doppelbindungen der olefinisch ungesättigten Öle nicht radikalisch oder ionisch polymerisierbar im Sinne der Polymerchemie sind, d. h. keine Polymere durch Kettenreaktionen bilden, und polymerisationsinhibierend/abbrechend wirken. Im Gegensatz zur bekannten Kopplung/Pfropfung von PTFE mit Monomeren ist mit Ölen eine Pfropf-(co-)polymerisation nicht möglich.

Daher war davon auszugehen, dass aufgrund der langjährig bekannten Reaktionsmechanismen von olefinisch ungesättigten Ölen keinerlei Reaktionen zwischen den PTFE-Partikeln und den olefinisch ungesättigten Ölen stattfinden würden.

Überraschenderweise erfolgt aber doch durch den Einsatz modifizierter PTFE-Polymere und bevorzugt PTFE-(Emulsions-)Polymere mit persistenten Perfluor-(peroxy-)radikalen eine Radikalreaktion, die in Verbindung mit der mechanischen Beanspruchung zur Deagglomeration von PTFE-Agglomeraten zu PTFE-Primärpartikeln eine Radikalreaktion und dadurch eine kovalente/chemische Kopplung zwischen den Öl-Molekülen und der PTFE-Partikeloberfläche.

Weiterhin wird durch die mechanische Beanspruchung der PTFE-Partikel offensichtlich eine deutliche und permanente Ladungstrennung zwischen den gekoppelten Öl-Molekülen und der PTFE-Partikeloberfläche erreicht, wodurch sich einerseits keine weiteren Öl-Moleküle und/oder PTFE-Partikel an die PTFE-Partikeloberfläche anlagern und gleichzeitig auch keine weitere Kopplung bereits gekoppelter Öl-Moleküle mit der PTFE-Partikeloberfläche erfolgen kann. Damit wird faktisch jedes einzelne PTFE-Partikel durch die angekoppelten Öl-Moleküle und durch elektrostatische Abstoßung von den anderen PTFE-Partikeln ferngehalten und eine Agglomeration kann nicht oder nur in geringem Maße erfolgen.

Bekannt ist, dass PTFE mit persistenten Perfluor-(peroxy-)radikalen zur Reaktion mit olefinisch ungesättigten Verbindungen wie Monomeren, Makromeren, Oligomeren und Polymeren befähigt ist. Dadurch wird eine direkte Oberflächenmodifizierung der PTFE-(Mikro-/Nano-)Partikel erreicht. Bei erfindungsgemäßem Einsatz von speziell (plasma- und/oder strahlen-) modifiziertem PTFE-Emulsionspolymer mit persistenten Perfluor-(peroxy-)radikalen, die aus Mikro- und/oder Nano-Partikeln bestehen, in die Umsetzung mit olefinisch ungesättigten Ölen wurde unter Einsatz mechanischer Beanspruchung überraschenderweise festgestellt, dass sich sehr feindispergierte, langzeitstabile Öl-PTFE-Dispersionen bilden, die auch bei Verdünnung mit ungesättigten und/oder gesättigten Ölen oder nach der (nachträglichen) Hydrierung der olefinisch ungesättigten Doppelbindungen keine Sedimentationserscheinungen aufweisen. Dieses Phänomen wird auf die elektrostatische Aufladung und Ladungstrennung der Öl-PTFE-Dispersionspartikel während der Dispergierung unter mechanischer Beanspruchung zurückgeführt. Diese Ladungstrennung zwischen den ansonsten unverträglichen Komponenten - dem PTFE-Partikel und den an der PTFE-Partikeloberfläche gekoppelten Öl-Molekülen war überraschend und ist die Ursache für die langzeitstabile Dispergierung im Öl-PTFE-Schmiermittelsystem.

Maßgebend für die für die Dispergierung des PTFE im Scherspalt eines Ultra-Turrax-Rührers als Dispergiergerät sind der Schergradient und die Verweilzeit der Partikel im Scherfeld bzw. Scherspalt. Mit einem solchen Ultra-Turrax-Rührer kann die erfindungsgemäße mechanische Beanspruchung auf die PTFE-Partikel in dem Öl oder Ölgemisch aufgebracht werden. Durch die großen Beschleunigungskräfte beim radialen Durchgang der PTFE-Partikel werden die PTFE-Partikel im Öl von sehr starken Scher- und Schubkräften beansprucht. Im Scherspalt zwischen Rotor und Stator treten zusätzliche Turbolenzen auf, die zu einer optimalen Zer- und Verteilung des PTFE im Öl führen. Der Dispergierwirkungsgrad wird aus dem Produkt aus Schergradient und Verweilzeit erhalten. Der optimale Dispergierbereich für die Umfangsgeschwindigkeit der Rotor-Stator-Anordnung liegt im Bereich von 10 bis 24 m/s, wobei außerhalb dieses Bereiches in Abhängigkeit von der Zeit noch sehr gute Ergebnisse erhalten werden.

Im optimalen Bereich ist meist eine Bearbeitungszeit von wenigen Minuten ausreichend.

Eine weitere Möglichkeit zur Aufbringung einer mechanischen Beanspruchung auf die PTFE-Partikel ist das Verdüsen der Öl-PTFE-Mischung auf eine harte Unterlage Wenn die Öl-PTFE-Partikel-Mischung mit hoher Geschwindigkeit aus einer (Rund- oder Schlitz-)Düse oder einem Ringspalt gedrückt/verdüst wird und auf ein Prallblech/eine harte Unterlage trifft, wird eine feinverteilte stabile Öl-PTFE-Dispersion erhalten. Vorteilhaft ist, wenn diese Mischung mit einer Temperatur von > 25°C und vorzugsweise > 60°C verdüst wird.

Analoge Effekte können beim Durchleiten einer Öl-PTFE-Mischung mit höherem Druck durch ein Sieb oder mehrfach angeordnete Siebe/Siebpaket [Siebe(Siebronden) mit Maschenweite < 50 µm, vorzugsweise < 25 µm, Anordnung mit gleichen oder variablen Maschenweiten] und/oder durch Sintermetallsiebe bzw. Sintermetallscheiben/Sintermetallfiltersiebe und/oder durch entsprechend geschnittene Mischaggregate/statische Mischer erreicht werden.

Eine weitere, sehr elegante Methode zur Dispergierung ist die Behandlung der Öl-PTFE-Mischung durch Ultraschall. Als Vorteilhaft hat sich erwiesen, wenn die Mischung (möglichst im Kreislauf) direkt an der Ultraschallsonde vorbeigeführt/vorbeigeleitet wird und so im Ultraschallfeld dispergiert wird.

Für bestimmte PTFE-Nano- oder Mikropulver, vorzugsweise solche modifizierten PTFE-Pulver mit höheren Bestrahlungsdosen, wie PTFE-Nanopulver > 100 kGy und PTFE Mikropulver > 250 kGy, kann auch ein Zahnscheibenrührer (z.B. Dispermat) erfolgreich für das Aufbringen der mechanischen Beanspruchung eingesetzt werden. Die Scherwirkung hat sich für die Herstellung einer stabilen Dispersion als ausreichend erwiesen.

Der gravierende Vorteil dieser Erfindung ist die Langzeitstabilität der Öl-PTFE-Dispersion als spezielles Schmiermittelsystem. Dieses Öl-PTFE-Schmiermittelsystem ist auch ohne Additive/Zusatzstoffe und Hilfseinrichtungen zur Redispergierung des ansonsten sedimentierenden PTFE in ölgeschmierten Kraftübertragungseinrichtungen stabil. Vor allem bei langsam laufenden Aggregaten wirkt sich dieses System vorteilhaft aus. Wird das Öl durch den Druck der Aggregat-Komponenten aus dem Spalt verdrängt und die Komponenten stehen mehr oder minder in direktem Kontakt miteinander, wird dadurch eine erhöhte Reibung generiert/erzeugt, was (a) zu Energieverlusten durch Reibung und (b) zu einem erhöhten Verschleiß führt. Die langzeitstabilen Öl-PTFE-Dispersionen gewährleisten unter solchen Bedingungen, dass zwar das Öl im Spalt verdrängt wird, jedoch dass das PTFE mit den besonderen antiadhäsiven Eigenschaften als Festschmierstoffkomponente in der Öl-PTFE-Dispersion im Reibspalt vorteilhaft als Festschmierstoff zur Wirkung kommt und so sowohl die Reibungskoeffizienten als auch den Verschleiß senkt. Die durch Modifizierung in Gegenwart von Sauerstoff im PTFE generierten (Carbonylfluorid- und/oder Carbonsäure-)Gruppen wirken unter Druck/der Presskraft zwischen den Komponentenoberflächen vorteilhaft haftungsvermittelnd, so dass sich oberflächlich ein haftender, gleitreibungsvermittelnder PTFE-Film ausbildet, der ohne diese funktionellen Gruppen nicht fixiert vorliegt und sich leicht abtrennen lässt.

Dieser Vorteil kann auch in der Verarbeitung solcher Öl-PTFE-Dispersionen zu Fetten und später im Einsatz dieser Fette von Vorteil sein, da das PTFE dann im Fett nicht zur Agglomeration und zum Verklumpen neigt.

Bekannt ist, dass olefinisch ungesättigte Öle zum Verharzen neigen. Dies kann in technischen Anwendungen von Nachteil sein. Deshalb bestehen weitere vorteilhafte Varianten der erfindungsgemäßen Lösung darin, dass nach der reaktiven Umsetzung des PTFE-(Emulsions-)Polymer mit dem olefinisch ungesättigten Öl (a) die konzentrierte Öl-PTFE-Dispersion mit einem gesättigten/nicht verharzenden Öl verdünnt oder (b) die mit Ölmolekülen modifizierten/gepfropften PTFE-Partikel aus der Dispersion abgetrennt und in ein gesättigtes/nicht verharzendes Öl zu überführt und in diesem System redispergiert werden. Die vorteilhaften Eigenschaften der Dispersionsstabilität dieser mit Öl-gepfropften PTFE-Produkte bleiben erhalten und sind somit auch in andere (Grund-)Öl-Systeme überführbar und nicht final auf das Öl beschränkt, in dem die reaktive Kopplung zwischen dem PTFE und dem olefinisch ungesättigten Öl durchgeführt wurde.

Die langzeitstabilen Öl-PTFE-Dispersionen werden vor allem auf dem Gebiet des Maschinenbaus und hier speziell in bewegten Teilen mit tribologischen Anforderungen hinsichtlich Gleitreibung und Verschleiß wie z. B. in Getrieben (Steuergetriebe, Getriebe zur Kraftübertragung), Lagern (Kugellager, Wälzkörperlager, Gleitlager und hydrostatische sowie hydrodynamische Gleitlager), Kolbenmaschinen usw. benötigt. Ferner können solche Dispersionen vorteilhaft zu Fetten weiterverarbeitet werden, die die Eigenschaft besitzen, dass das PTFE nicht mehr agglomeriert und phasensepariert. Langzeitstabile Öl-PTFE-Dispersionen zeigen auch nach Wochen und bei Verdünnung keine Sedimentationserscheinungen. Dadurch bleibt das PTFE auch ohne zusätzliche (Dispersionshilfs-)Mittel oder zusätzlichen Redispergierungsaggregaten aktiv im Schmiermittelsystem erhalten.

Nachfolgend wird die Erfindung an mehreren Ausführungsbeispielen näher erläutert.

### Vergleichsbeispiel 1

In einem 250 ml Dreihalskolben mit Reinststickstoff-Begasung/Gaszuführung, einem Ultraturraxrührer und einem kurzen Rückflusskühler mit Bunsenventil werden 135 g Esteröl (Priolube: ohne olefinisch ungesättigte Doppelbindungen/vollständig gesättigt) vorgelegt und 30 min unter Stickstoffspülung gerührt. Anschließend werden 15 g PTFE-Emulsionspolymer (das in Gegenwart von Sauerstoff mit 500 kGy elektronenbestrahlt wurde) zugesetzt, unter Rühren auf 100°C erwärmt und 2 Stunden bei 100°C und weitere 2 Stunden bei 150°C intensiv gerührt. Die Dispersion lässt man ohne Rühren abkühlen. Schon beim Abkühlen sedimentiert das PTFE relativ rasch und trennt sich in eine klare überstehende Ölphase und das sedimentierte PTFE.

Während das reine Priolube-Öl einen Brugger-Wert von 29 MPa aufweist, erhöhen sich die Brugger-Werte des Öls in der klaren überstehenden Ölphase nur unwesentlich auf 33 Mpa.

### Beispiel 1

Analog Vergleichsbeispiel 1 werden in einem 250 ml Dreihalskolben mit Reinststickstoff-Begasung/Gaszuführung, einem Zahnscheibenrührer und einem kurzen Rückflusskühler mit Bunsenventil 135 g Esteröl mit olefinisch ungesättigten Doppelbindungen (Synative: mit olefinisch ungesättigten Doppelbindungen) vorgelegt und 30 min unter Stickstoffspülung gerührt. Anschließend werden 15 g PTFE Emulsionspolymer, bestehend aus PTFE-Nanopartikeln (das in Gegenwart von Sauerstoff mit 300 kGy elektronenbestrahlt wurde, mit PTFE-Primärpartikelgrößen von 60 bis 80 nm) zugesetzt, unter Rühren auf 100°C erwärmt und 2 Stunden bei 100°C und weitere 2 Stunden bei 140°C intensiv gerührt. Die Dispersion lässt man ohne Rühren abkühlen.

Nach dem Abkühlen liegt eine langzeitstabile Öl-PTFE-Dispersion vor, die auch nach 8 Wochen keine Sedimentationserscheinungen aufweist, d. h. es setzt sich kein PTFE ab. Auch bei der Verdünnung von 10 Ma.-% an modifizierten PTFE-Nanopartikeln auf 3 Ma.-% ist keine Sedimentation zu beobachten.

Während das reine Synative-Öl einen Brugger-Wert von 26 MPa aufweist, erhöhen sich die Brugger-Werte des Öls mit 10 Ma.-% an modifizierten PTFE-Nanopartikeln auf 160 MPa und des Öls mit nur 3 Ma.-% an modifizierten PTFE-Nanopartikeln noch auf 68 MPa.

### Beispiel 2

Analog Vergleichsbeispiel 1 werden in einem 250 ml Dreihalskolben mit Reinststickstoff-Begasung/Gaszuführung, einem Ultraturraxrührer und einem kurzen Rückflusskühler mit Bunsenventil 120 g ungesättigtes Esteröl (Synative: mit olefinisch ungesättigten Doppelbindungen) vorgelegt und 30 min unter Stickstoffspülung gerührt. Anschließend werden 30 g PTFE-Emulsionspolymer, bestehend aus PTFE-Mikropartikeln (das in Gegenwart von Sauerstoff mit 500 kGy elektronenbestrahlt wurde, mit PTFE-Primärpartikelgrößen von 200 nm) zugesetzt, unter Rühren auf 100°C erwärmt und 1 Stunde bei 100°C und eine weitere Stunde bei 150°C intensiv gerührt. Die Dispersion lässt man ohne Rühren abkühlen.

Nach dem Abkühlen liegt eine langzeitstabile Öl-PTFE-Dispersion vor, die auch nach 10 Wochen keine Sedimentationserscheinungen aufweist, d. h. es setzt sich kein PTFE ab. Auch bei der Verdünnung von 20 Ma.-% an modifizierten PTFE-Mikropartikeln auf 2,5 Ma.-% ist keine Sedimentation zu beobachten.

Während das reine Synative-Öl einen Brugger-Wert von 26 MPa aufweist, erhöhen sich die Brugger-Werte des Öls mit 20 Ma.-% an modifizierten PTFE-Mikropartikeln auf 210 MPa und des Öls mit nur 2,5 Ma.-% an modifizierten PTFE-Mikropartikeln noch auf 96 MPa.

## Patentansprüche

1. langzeitstabile Öl-PTFE-Dispersion bestehend aus PTFE-Partikeln und mindestens einem einfach oder mehrfach olefinisch ungesättigtem Öl oder Ölgemisch, wobei die Moleküle des olefinisch ungesättigten Öles oder der olefinisch ungesattigten Anteile des Ölgemisches an PTFE-Partikeloberflächen über Radikalreaktionen kovalent/chemisch gekoppelt sind, und wobei eine feine Dispergierung der PTFE Partikel im Öl oder Ölgemisch vorliegt.

2. langzeitstabile Öl-PTFE-Dispersion nach Anspruch 1, bei dem die Öle oder Ölgemische überwiegend oder vollständig aus olefinisch ungesättigten Ölen oder Ölanteilen bestehen.

3. langzeitstabile Öl-PTFE-Dispersion nach Anspruch 1, bei dem das mit Öl modifizierte PTFE konzentriert bis 90 Masse-% oder verdünnt bis 0,1 Masse-% in der Öl-PTFE-Dispersionen vorhanden ist, wobei vorteilhafterweise das mit Öl modifizierte PTFE konzentriert bis 60 Masse-% oder verdünnt bis 1,0 Masse-%, und/oder noch vorteilhafterweise das mit Öl modifizierte PTFE konzentriert bis 30 Masse-% oder verdünnt bis 3,0 Masse-% in der Öl-PTFE-Dispersionen vorhanden ist.

4. langzeitstabile Öl-PTFE-Dispersion nach Anspruch 3, bei dem die verdünnten Öl-PTFE-Dispersionen mit dem gleichen Öl oder Ölgemisch der Öl-PTFE-Dispersion verdünnt vorliegen und/oder die verdünnten Öl-PTFE-Dispersionen mit einem anderen als dem eingesetzten, aber mit der Öl-PTFE-Dispersion mischbaren Öl oder Ölgemisch verdünnt vorliegen.

5. langzeitstabile Öl-PTFE-Dispersion nach Anspruch 1, bei der die PTFE-Partikel im Wesentlichen als Primärpartikel in der Dispersion vorliegen.

6. Verfahren zur Herstellung von langzeitstabilen Öl-PTFE-Dispersionen, bei dem modifizierte PTFE-Polymere mit persistenten Perfluorradikalen und/oder persistenten Perfluorperoxyradikalen gemeinsam mit mindestens einem olefinisch ungesättigten Öl oder Ölgemisch, welches mindestens olefinisch ungesättigte Öl-Anteile aufweist, gemischt und nachfolgend die modifizierten PTFE-Polymere einer mechanischen Beanspruchung unterworfen werden, wodurch die eingesetzten modifizierten PTFE-Polymere deagglomeriert und fein dispergiert werden.

7. Verfahren nach Anspruch 6, bei dem als modifizierte PTFE-Polymere modifizierte PTFE-Emulsions-Polymere eingesetzt werden.

8. Verfahren nach Anspruch 6, bei dem als modifizierte PTFE-Polymere strahlenchemisch oder plasmachemisch behandelte PTFE-Polymere oder PTFE-Polymere mit aus dem Polymerisationsprozess stammenden Perfluor-Radikalzentren eingesetzt werden.

9. Verfahren nach Anspruch 8, bei dem die strahlenchemische Behandlung der PTFE-Polymere unter Sauerstoffeinfluss durchgeführt wird.

10. Verfahren nach Anspruch 6, bei dem als Öle oder Ölgemische solche eingesetzt werden, die überwiegend oder vollständig aus olefinisch ungesättigten Ölen oder Ölanteilen bestehen.

11. Verfahren nach Anspruch 6, bei dem die Mischung in einem Dispergieraggregat durchgeführt wird.

12. Verfahren nach Anspruch 6, bei dem als mechanische Beanspruchung eine Scherbeanspruchung aufgebracht wird.

13. Verfahren nach Anspruch 6, bei dem die mechanische Beanspruchung durch eine Ultraschallbehandlung, durch einen Ultraturraxrührer, durch einen Zahnscheibenrührer oder durch Verdüsen der Mischung oder eine Kombination von Dispergiermethoden und Dispergiergeräten aufgebracht wird.

14. Verfahren nach Anspruch 6, bei dem Dispersionshilfsmittel und Dispersionsstabilisatoren zugegeben werden.

## Claims

1. Oil-PTFE dispersion with prolonged stability, consisting of PTFE particles and at least one mono- or polyolefinically unsaturated oil or oil mixture, the molecules of the olefinically unsaturated oil or of the olefinically unsaturated components of the oil mixture being covalently/chemically coupled to PTFE particle surfaces via free-radical reactions, and a fine dispersion of the PTFE particles being present in the oil or oil mixture.

2. Oil-PTFE dispersion with prolonged stability according to Claim 1, in which the oils or oil mixtures consist predominantly or completely of olefinically unsaturated oils or oil components.

3. Oil-PTFE dispersion with prolonged stability according to Claim 1, in which the oil-modified PTFE is present in the oil-PTFE dispersions in concentrated form up to 90% by mass or in dilute form down to 0.1% by mass, the oil-modified PTFE advantageously being present in the oil-PTFE dispersions in concentrated form up to 60% by mass or in dilute form down to 1.0% by mass, and/or even more advantageously the oil-modified PTFE is present in concentrated form up to 30% by mass or in dilute form down to 3.0% by mass.

4. Oil-PTFE dispersion with prolonged stability according to Claim 3, in which the dilute oil-PTFE dispersions are present diluted with the same oil or oil mixture of the oil-PTFE dispersion and/or the dilute oil-PTFE dispersions are present diluted with an oil or oil mixture which is different from that used but is miscible with the oil-PTFE dispersion.

5. Oil-PTFE dispersion with prolonged stability according to Claim 1, in which the PTFE particles are present essentially as primary particles in the dispersion.

6. Process for producing oil-PTFE dispersions with prolonged stability, in which modified PTFE polymers with persistent perfluoro radicals and/or persistent perfluoroperoxy radicals are mixed together with at least one olefinically unsaturated oil or oil mixture comprising at least olefinically unsaturated oil components, and then the modified PTFE polymers are subjected to mechanical stress, which deagglomerates and finely disperses the modified PTFE polymers used.

7. Process according to Claim 6, in which the modified PTFE polymers used are modified PTFE emulsion polymers.

8. Process according to Claim 6, in which the modified PTFE polymers used are radiation- or plasma-treated PTFE polymers or PTFE polymers with perfluoro radical sites originating from the polymerization process.

9. Process according to Claim 8, in which the radiation treatment of the PTFE polymers is performed under the influence of oxygen.

10. Process according to Claim 6, in which the oils or oil mixtures used are those which consist predominantly or completely of olefinically unsaturated oils or oil components.

11. Process according to Claim 6, in which the mixing is performed in a dispersing unit.

12. Process according to Claim 6, in which the mechanical stress applied is in the form of shear stress.

13. Process according to Claim 6, in which the mechanical stress is applied by an ultrasound treatment, by an Ultra-Turrax stirrer, by a toothed disc stirrer or by atomization of the mixture, or a combination of dispersing methods and dispersing units.

14. Process according to Claim 6, in which dispersion aids and dispersion stabilizers are added.

## Revendications

1. Dispersion d'huile-PTFE stable à long terme constituée de particules de PTFE et d'au moins une huile oléfiniquement monoinsaturée ou polyinsaturée ou un mélange d'huiles, les molécules de l'huile oléfiniquement insaturée ou des proportions oléfiniquement insaturées du mélange d'huiles étant couplées de manière covalente/chimique aux surfaces des particules de PTFE par des réactions radicalaires et une dispersion fine des particules de PTFE dans l'huile ou le mélange d'huiles existant.

2. Dispersion huile-PTFE stable à long terme selon la revendication 1, dans laquelle les huiles ou les mélanges d'huiles sont principalement ou complètement constitués d'huiles ou de proportions d'huiles oléfiniquement insaturées.

3. Dispersion d'huile-PTFE stable à long terme selon la revendication 1, dans laquelle le PTFE modifié par l'huile est présent sous forme concentrée jusqu'à 90% en masse ou diluée jusqu'à 0,1% en masse dans les dispersions d'huile-PTFE, le PTFE modifié par l'huile étant avantageusement présent sous forme concentrée jusqu'à 60% en masse ou diluée jusqu'à 1,0% en masse, et/ou plus avantageusement, le PTFE modifié par l'huile étant présent sous forme concentrée jusqu'à 30% en masse ou diluée jusqu'à 3,0% en masse dans les dispersions d'huile-PTFE.

4. Dispersion d'huile-PTFE stable à long terme selon la revendication 3, dans laquelle les dispersions diluées d'huile-PTFE se trouvent sous une forme diluée avec la même huile ou le même mélange d'huiles que la dispersion d'huile-PTFE et/ou les dispersions diluées d'huile-PTFE se trouvent sous une forme diluée avec une autre huile ou un autre mélange d'huiles que celle/celui utilisé(e), mais miscible avec la dispersion d'huile-PTFE.

5. Dispersion d'huile-PTFE stable à long terme selon la revendication 1, dans laquelle les particules de PTFE se trouvent principalement sous forme de particules primaires dans la dispersion.

6. Procédé pour la préparation de dispersions d'huile-PTFE stables à long terme, dans lequel les polymères modifiés de PTFE sont mélangés avec des radicaux perfluorés persistants et/ou des radicaux perfluoroperoxy persistants ensemble avec au moins une huile oléfiniquement insaturée ou au moins un mélange d'huiles, qui présente au moins des proportions d'huile oléfiniquement insaturée, puis les polymères de PTFE modifiés sont soumis à une sollicitation mécanique, suite à quoi les polymères de PTFE modifiés utilisés sont désagglomérés et finement dispersés.

7. Procédé selon la revendication 6, dans lequel on utilise, comme polymères de PTFE modifiés, des polymères de PTFE en émulsion.

8. Procédé selon la revendication 6, dans lequel on utilise, comme polymères de PTFE modifiés, des polymères de PTFE traités chimiquement par des rayons ou un plasma ou des polymères de PTFE présentant des centres radicalaires perfluorés provenant du procédé de polymérisation.

9. Procédé selon la revendication 8, dans lequel le traitement chimique par des rayons des polymères de PTFE est réalisé sous l'influence de l'oxygène.

10. Procédé selon la revendication 6, dans lequel on utilise comme huiles ou les mélanges d'huiles, celles/ceux qui sont principalement ou complètement constitué(e)s d'huiles ou de proportions d'huiles oléfiniquement insaturées.

11. Procédé selon la revendication 6, dans lequel le mélange est réalisé dans un appareil de dispersion.

12. Procédé selon la revendication 6, dans lequel, comme sollicitation mécanique, on applique une sollicitation par cisaillement.

13. Procédé selon la revendication 6, dans lequel la sollicitation mécanique est appliquée par un traitement aux ultrasons, par un agitateur ultraturrax, par un agitateur à roues dentées ou par vaporisation du mélange ou par une combinaison de procédés de dispersion et d'appareils de dispersion.

14. Procédé selon la revendication 6, dans lequel on ajoute des adjuvants de dispersion et des stabilisateurs de dispersion.
